# EUROPEAN PATENT SPECIFICATION

(11) **EP 3 167 506 B1**
(45) Date of publication and mention of the grant of the patent: **24.04.2019**
(21) Application number: 15730865.1
(22) Date of filing: 26.05.2015
(51) Int. Cl.: H01M 8/16, H01M 8/00

(54) **TUBULAR ELECTRODE ASSEMBLY, USE OF SUCH ASSEMBLY, MICROBIAL FUEL CELL COMPRISING SUCH ASSEMBLY AND PROCESS FOR CONVERTING LIGHT ENERGY INTO ELECTRICITY**
RÖHRENFÖRMIGE ELEKTRODENANORDNUNG, VERWENDUNG SOLCH EINER ANORDNUNG, MIKROBIELLE BRENNSTOFFZELLE MIT SOLCH EINER ANORDNUNG UND VERFAHREN ZUR UMWANDLUNG VON LICHTENERGIE IN ELEKTRIZITÄT
ENSEMBLE ÉLECTRODE TUBULAIRE, UTILISATION D'UN TEL ENSEMBLE, PILE À COMBUSTIBLE MICROBIENNE COMPRENANT UN TEL ENSEMBLE ET PROCÉDÉ POUR CONVERTIR L'ÉNERGIE DE LA LUMIÈRE EN ÉLECTRICITÉ

(30) Priority: 26.05.2014 EP 14169887
(43) Date of publication of application: 17.05.2017
(73) Proprietor: Plant-e Knowledge B.V., 6708 JC Wageningen (NL)
(72) Inventor: DE JAGER, Pim, NL-6704 BP Wageningen (NL); STRIK, David Petrus Bonifacius Theodorus Bernardus, NL-6706 ET Wageningen (NL); BUISMAN, Cees Jan Nico, NL-8571 RH Harich (NL); HELDER, Marjolein, NL-6708 JC Wageningen (NL)
(74) Representative: Nederlandsch Octrooibureau
(86) International application number: PCT/NL2015/050376
(87) International publication number: WO 2015/183084

(56) References cited:
- WO-A1-2008/127109
- US-A1- 2008 044 721
- US-A1- 2012 276 418

## Description

### Field of the Invention

The invention relates to a tubular electrode assembly for use in a fuel cell, to use of such assembly in a fuel cell, to a microbial fuel cell comprising such assembly, and to a process for converting light energy into electricity using such microbial fuel cell.

### Background of the Invention

Microbial fuel cells are known in the art. Such fuel cells comprise an anode and a cathode separated by a membrane or other layer that can transport protons. The fuel cell further comprises an anode compartment that contains anodophilic micro-organisms and a cathode compartment to which an oxidant such as oxygen can be supplied. The micro-organisms oxidise organic compounds to generate carbon dioxide, electrons and protons. The protons are transported from the anode to the cathode via the proton-permeable layer and electrons are transported from the anode to the cathode via an external electric circuit.

In WO2008/127109 is disclosed a so-called plant microbial fuel cell, wherein the roots of a living plant and anodophilic micro-organisms are placed in an anode compartment of a fuel cell. The micro-organisms oxidise organic compounds that are formed by the plant by means of photosynthesis and excreted by the roots of the plant, so that electrons and protons are formed in the anode compartment. The protons are conveyed to the cathode compartment, e.g. via an ion-selective membrane and the electrons are transported from the anode to the cathode via an external electrical circuit so that electricity is generated.

US 2012/0276418 discloses a method for in-situ treatment of sediment simultaneous with microbial electricity generation. A microbial fuel cell is disclosed, comprising an insulating tube (preferably PVC) with a perforated section, wherein the perforated section is wrapped by a membrane cathode that is in turn wrapped by an anode, and electric wires are extended from the membrane cathode and the anode. The cathode is a membrane cathode comprising a catalyst, for example pyr-FePc, CoTMPP or MnO₂. A waterproof layer is present in between the cathode and the anode.

There is a need in the art for improved microbial fuel cells, in particular plant fuel cells that are suitable for production of electricity on a larger scale, preferably in existing natural areas. In such natural areas there is a need for electrode assemblies that are suitable for configurations that may extend over a length in the order of kilometers.

### Summary of the Invention

A novel electrode assembly has been found that is suitable to be used in microbial fuel cells and in particular in plant microbial fuel cell or other fuel cells making use of organisms capable of photosynthesis. The electrode assembly is suitable to be used in a configuration of considerable length. Moreover, the assembly is suitable to be used in an environment wherein it is immersed in water or in wet soil. The electrode assembly according to the invention is a tubular electrode assembly with a central inner tubular air supply space, an annular cathode surrounding the tubular air supply space, an annular anode surrounding the cathode, an oxygen-permeable layer that is impermeable for water between the tubular air space and the cathode, an electrically-insulating, ion-permeable layer between the cathode and the anode, and an inlet for air or another molecular-oxygen containing gas into the central air supply space that prevents water from entering the air supply space. Current collectors are attached to the electrodes.

Accordingly the invention relates to a tubular electrode assembly for use in a fuel cell comprising:
- a central inner tubular air supply space;
- an annular cathode surrounding the tubular air supply space;
- an annular anode surrounding the cathode;
- an oxygen-permeable layer that is impermeable for water between the tubular air supply space and the cathode;
- an electrically-insulating, ion-permeable layer between the cathode and the anode; and
- a first current collector attached to the anode and a second current collector attached to the cathode, wherein the first and the second current collectors are suitable for electrically connecting the anode with the cathode via an external electrically conductive path,
wherein the central inner tubular air supply space is provided with an inlet for air that prevents water from entering the tubular air supply space.

The electrode assembly according to the invention is compact and has the anode at its outside. This makes the assembly particularly suitable for a plant microbial fuel cell, since the electrode assembly can be directly immersed into the soil wherein the plants are growing. Moreover, its configuration is such that it can easily be used in a configuration with a length in the order of kilometers such that it can suitably be applied in extensive natural areas wherein suitable plants are growing.

An important advantage of the electrode assembly according to the invention is that it is constructed such that the cathode can still be supplied with air or another molecular-oxygen containing gas, even when the assembly is immersed in a wet environment such as water or wet soil.

In a further aspect, the invention relates to use of a tubular electrode assembly in a fuel cell, in particular in a microbial fuel cell, more in particular in a microbial fuel cell that makes use of organisms capable of photosynthesis such as plants, algae or cyanobacteria.

In another aspect the invention relates to a microbial fuel cell comprising the tubular electrode assembly as hereinbefore defined, wherein the tubular electrode assembly is immersed in wet soil or in an aqueous solution, wherein the wet soil or the aqueous solution comprises anodophilic micro-organisms, one or more organic compounds capable to be oxidised by the anodophilic micro-organisms, and nutrients, and wherein in the electrode assembly, the first current collector and the second current collector are electrically connected via an external electrically conductive path.

In a final aspect, the invention relates to a process for converting light energy into electricity using a microbial fuel cell as hereinbefore defined, wherein the tubular electrode assembly is immersed in wet soil containing roots of a plant capable of photosynthesis or in wet soil or an aqueous solution containing organisms capable of photosynthesis such as algae or cyanobacteria, wherein the plant, algae or cyanobacteria are exposed to light, preferably daylight, and a molecular-oxygen containing gas, preferably air, is supplied to the central inner tubular air supply space and wherein the plant, algae or cyanobacteria convert carbon dioxide into an organic compound by means of photosynthesis, the roots of the plant, the algae or cyanobacteria excrete the organic compound into the wet soil or the aqueous solution and the anodophilic micro-organisms oxidise the organic compound to form electrons and protons.

### Summary of the Drawings

In Figure 1 is schematically shown a cross-sectional view of an electrode assembly according to the invention.

In Figure 2 is schematically shown a longitudinal section of an electrode assembly according to the invention immersed in wet soil.

### Detailed Description of the Invention

The tubular electrode assembly according to the invention comprises a cathode and an anode. The assembly is tubular with a central tubular space for air supply at its inside that is surrounded by an annular cathode, which on its turn is surrounded by an annular anode. The assembly has an annular, electrically-insulating, ion-permeable layer between the anode and the cathode. Reference herein to an electrically-insulating is to a layer that is not conductive for electrons. This electrically-insulating, ion-permeable layer avoids direct transport of electrons from the anode to the cathode. The central inner tubular air supply space is provided with one or more inlets for air, suitable for supplying air or another molecular-oxygen comprising gas to the central air supply space. In order to prevent water from entering the central air supply space when the assembly is, during normal operation of the assembly, immersed in a wet environment, the assembly comprises an oxygen-permeable layer that is impermeable for water between the tubular air supply space and the cathode, and the inlet(s) for air is/are such that water is prevented from entering the tubular air supply space via the inlet(s) for air. Preferably, the inlet for air is an inlet tube of a material that is impermeable for water, wherein the inlet tube has at one end an opening for air and is, at its opposite end, fluid-tightly connected to the oxygen-permeable layer between the tubular air supply space and the cathode. Thus, if during normal operation of the assembly in a fuel cell, the opening for air is placed above the surface of the wet environment in which the assembly is placed, filling of the air supply space with water is prevented. The water-impermeable, oxygen-permeable layer between the tubular air supply space and the cathode prevents water from the cathode to enter the air supply space whilst it allows molecular oxygen to contact the cathode. It is noted that during normal operation of the fuel cell, when the assembly is immersed in a wet environment, the cathode will typically be soaked with water.

Preferably, the central inner tubular air supply space has two opposite ends and is provided with a first inlet tube at a first end of the tubular air supply space and with a second inlet tube at its opposite end. More preferably, the first and the second inlet tubes and the water-impermeable, oxygen-permeable layer between the tubular air supply space and the cathode together form a single tube. The single tube is preferably made of a flexible material, such that the inlet tubes can easily be placed in the desired position above the surface of any immersing liquid or soil. The central inner tubular air supply space may be provided with further inlets for air, for example in the form of further inlet tubes of a water-impermeable, oxygen-permeable material opening into the central air supply space and fluid-tightly connected to the water-impermeable layer between the air supply space and the cathode, such that water from the cathode is prevented from flowing into the air supply space.

Any suitable water-impermeable, oxygen-permeable material may be used, preferably a flexible material that is not easily biodegradable, more preferably a polymer. Polysiloxans may for example suitably be used.

The electrode assembly further comprises a first current collector attached the anode and a second current collector attached the cathode. The first and the second current collectors are suitable for electrically connecting the anode with the cathode via an external electrically conductive path. Current collectors are well-known in the art. Any suitable current collector may be used. The current collector may have any suitable shape and may be made of any suitable electrically conductive material. It will be appreciated that it will depend on the cathode or anode material used, which current collector is most suitable. Typically, the current collector will be made of metal, preferably a metal that is not corrosive under the wet conditions under which the present electrode assembly will usually be applied. Examples of suitable current collectors are metal wires woven into the anode or the cathode or pinches that are pinched in the anode or the cathode.

In the electrode assembly according to the invention, the anode is located at the outside of the assembly and the cathode is located at the inside of the assembly with its inner surface facing the central air supply space. If needed for reinforcement of the assembly, the assembly may further comprise a casing layer. The casing layer is surrounding the anode such that it only partially covers the outer surface of the anode. Thus, if used in a microbial fuel cell, the anode is in direct contact with the soil or the aqueous solution in which the assembly is immersed and the one or more organic compounds released in the soil or aqueous solution can flow to the anode. Any suitable casing layer may be used, for example a wire wound around the assembly or a net-like structure. The casing layer may be made of any suitable material, preferably of a material that is not rapidly biodegraded under the wet conditions under which the assembly will typically be used. Suitable materials include polymers and non-corrosive metals.

The electrode assembly is particularly suitable to be used in a fuel cell, preferably in a microbial fuel cell, more preferably in a plant microbial fuel cell or in a microbial fuel cell making use of other organisms capable of photosynthesis, such as algae or cyanobacteria. The invention therefore also relates to a fuel cell comprising the electrode assembly according to the invention, preferably to a microbial fuel cell comprising the electrode assembly according to the invention, and more preferably to a plant microbial fuel cell comprising the electrode assembly according to the invention.

If used in a fuel cell, one or more tubular electrode assemblies according to the invention, wherein in any of the one or more electrode assemblies the first current collector and the second current collector are electrically connected via an external electrically conductive path, are immersed in wet soil or in an aqueous solution comprising an electron donor. Air or another molecular-oxygen containing gas is supplied to the central air supply space via one or more inlets for air, preferably via one or more inlet tubes that have sufficient length to supply air from the atmosphere above the wet soil or aqueous solution wherein the one or more electrode assemblies are immersed.

If used in a microbial fuel cell, the one or more tubular electrode assemblies are immersed in wet soil or in an aqueous solution comprising anodophilic micro-organisms, an organic compound capable to be oxidised by the anodophilic micro-organisms as electron donor, and nutrients. Preferably, the electrode assembly is used in a plant fuel cell or in a microbial fuel cell making use of other organisms capable of photosynthesis, such as algae or cyanobacteria.

In the microbial fuel cell, the aqueous solution or wet soil wherein the electrode assembly is immersed form an anode chamber. The aqueous solution or wet soil comprises anodophilic micro-organisms and an organic compound that can be oxidised by the micro-organisms to form oxidised compounds, usually carbon dioxide, electrons and protons. The electrons thus formed are externally transported via the external electrical circuit from the anode to the cathode. The protons formed are internally transported through the ion-permeable layer to the cathode. Molecular oxygen that is supplied with the air or with the molecular-oxygen containing gas to the air supply space permeates through the oxygen-permeable layer to the cathode, is reduced at the cathode and reacts with the protons to form water.

Preferably, the microbial fuel cell according to the invention is a plant microbial fuel cell. In the plant microbial fuel cell according to the invention, the electrode assembly is immersed in wet soil. The wet soil contains roots of a plant capable of converting carbon dioxide into an organic electron donor compound by means of photosynthesis. Preferably, the one or more electrode assemblies are immersed in wet soil of an existing natural area with plants that have roots growing in that area.

The invention also relates to the use of a microbial fuel cell comprising a tubular electrode assembly according to the invention, wherein the tubular electrode assembly is immersed in wet soil or in an aqueous solution, wherein the wet soil or the aqueous solution comprises anodophilic micro-organisms, one or more organic compounds capable to be oxidised by the anodophilic micro-organisms, and nutrients, and wherein in the electrode assembly, the first current collector and the second current collector are electrically connected via an external electrically conductive path. The invention further relates to the use of a microbial fuel cell as defined above, wherein the tubular air supply space is provided with one or more inlet tubes as defined above, and wherein the opening for air of any one of the one or more inlet tubes is placed above the surface of the wet soil or the aqueous solution. The invention further relates to the use of a microbial fuel cell as defined above, wherein the microbial fuel cell is a plant microbial fuel cell, the tubular electrode assembly is immersed in wet soil, wherein the wet soil contains roots of a plant capable of converting carbon dioxide into the one or more organic compounds capable to be oxidised by the anodophilic micro-organisms, by means of photosynthesis.

The plant microbial fuel cell according to the invention can suitably be used for conversion of light energy into electricity by exposing the plant to light, preferably day light, and supplying air or another molecular-oxygen containing gas to the inner air supply space. By exposing the plant to light, the plant will convert carbon dioxide into an organic compound by means of photosynthesis. The roots of the plant, which are preferably contained in the wet soil in close vicinity of the anode, excrete the organic compound into the wet soil. The anodophilic micro-organisms in the wet soil oxidise the organic compound to form electrons and protons. The electrons are externally transported through the external electric circuit from the anode to the cathode and therewith generate electricity and the protons are internally transported through the ion-permeable layer to the cathode.

Instead of a plant microbial fuel cell, the microbial fuel cell according to the invention may be a fuel cell wherein algae or cyanobacteria are used to convert carbon dioxide into an organic compound by means of photosynthesis. In such microbial fuel cell, the wet soil or the aqueous solution wherein the one or more electrode assemblies are immersed contains algae or cyanobacteria. The algae or cyanobacteria are exposed to light, preferably daylight, and a molecular-oxygen containing gas, preferably air, is supplied to the central inner tubular air supply space and the algae or cyanobacteria convert carbon dioxide into an organic compound by means of photosynthesis and excrete the organic compound into the wet soil or aqueous solution and the anodophilic micro-organisms oxidise the organic compound to form electrons and protons.

The wet soil or aqueous solution comprises anodophilic micro-organisms. Anodophilic micro-organisms, also referred to as electrochemically active micro-organisms, are typically present in the environment and therewith in wet soil of natural plant areas or in wastewater streams. Therefore, if in the microbial fuel cell according to the invention the electrode assembly is immersed in wet soil, there is usually no need to inoculate the wet soil with anodophilic micro-organisms. In case the electrode assembly is immersed in an aqueous solution, it might be needed to inoculate the aqueous solution with anodophilic micro-organisms. Anodophilic micro-organisms are well-known in the art and include for example bacteria such as Geobacter species.

The aqueous solution or wet soil comprises one or more organic compounds that are capable to be oxidised by the anodophilic micro-organisms to form electron and protons. Such organic compounds are known in the art and may include any biodegradable organic compound, preferably a carbohydrate, organic acid, vitamin, amino acid, peptide, or protein combinations of two or more thereof.

The aqueous solution or wet soil comprises nutrients. Reference herein to nutrients is to inorganic compounds such as minerals that serve as micronutrients for the anodophilic micro-organisms. If wet soil is used, in particular wet soil in existing natural plant areas, the soil usually contains sufficient nutrients and addition of nutrients might not be needed.

The cathode and the anode may be made of any electron-conductive material known to be suitable for a fuel cell electrode, preferably carbon or a carbon-containing material such as graphite or activated carbon. The electron-conductive material may be used in any suitable structure to form an annular layer, for example in the form of a wound sheet of woven or non-woven carbon fibres. The cathode and the anode may have any suitable thickness, preferably in the range of from 1 mm to 10 cm.

The electrically-insulated, ion-permeable layer, may be any layer that does not conduct electrons and is permeable to ions, preferably is permeable to protons. Examples of such layers include a silica layer, such as a layer of sand, or a proton-selective membrane. Preferably, the electrically-insulated, ion-permeable layer is also water-permeable. In this embodiment, the electrically-insulated, ion-permeable and water-permeable layer may be any layer that does not conduct electrons, is permeable to ions, preferably to protons, and is permable to water. In a further preferred embodiment, the electrically-insulated, ion-permeable and water-permeable layer is a silica layer, such as a layer of sand. In another further preferred embodiment, the electrically-insulated, ion-permeable and water-permeable layer is a layer of cloth or textile, e.g. filter cloth. In another further preferred embodiment, the electrically-insulated, ion-permeable and water-permeable layer is composed of a polymeric material that is electrically insulating, ion-permeable and water-permeable. These materials are known in the art. In another further preferred embodiment, the electrically-insulated, ion-permeable and water-permeable layer is composed of a polymeric material that is electrically insulating and ion-permeable, wherein water-permeability of said layer is obtained by an open structure of the material. Examples include e.g. several types of filter cloth.

The tubular electrode assembly preferably has a length to diameter ratio of at least 4, more preferably in the range of from 5 to 100. In case an electrode assembly of substantial length is used, for example with a length to diameter ratio larger than 10 or larger than 20 or even larger than 50, it may be advantageous to segment the electrode assembly in anode/cathode segments of a limited length that are electrically separated from each other. This can suitably be done by placing electrically-insulating separation walls in a direction perpendicular to the length of the assembly. Such segmented assembly with anode/cathode segments of a limited length preferably has a single central tubular air supply space over the entire length of the assembly.

In a fuel cell, a single electrode assembly according to the invention may be used. However, in order generate a larger amount of energy, more than one electrode assemblies may be used in a fuel cell. Preferably, the microbial fuel cell according to the invention, comprises a plurality of electrode assemblies according to the invention, which may be electrically connected in series or parallel.

### Detailed Description of the Drawings

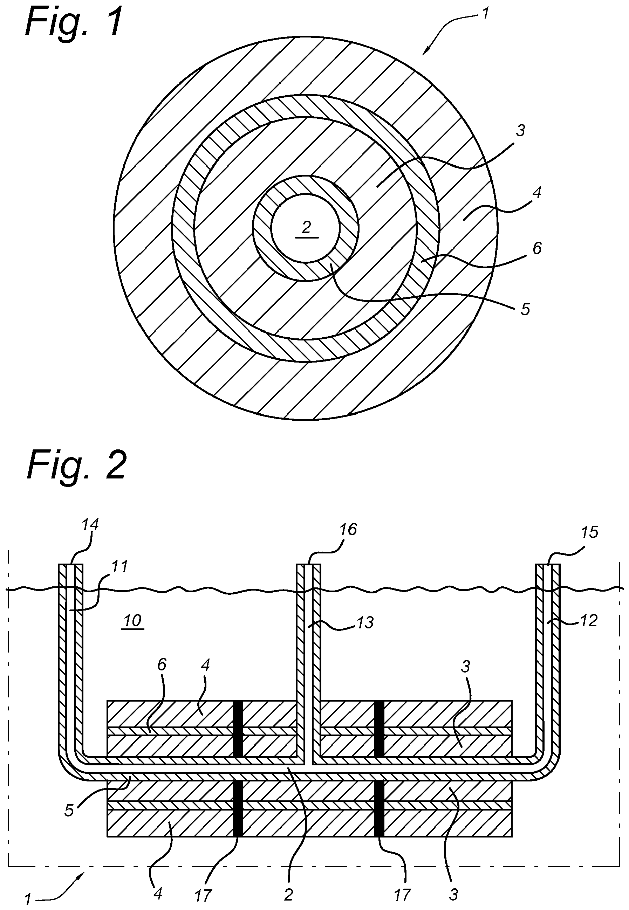

In Figure 1 is shown a schematic cross-sectional view of an electrode assembly according to the invention. Tubular assembly 1 comprises central inner tubular air supply space 2, annular cathode 3, annular anode 4, oxygen-permeable and water-impermeable layer 5 between air supply space 2 and cathode 3, and ion-permeable layer 6 between cathode 3 and anode 4. To each of the electrodes 3, 4 a current collector is attached (not shown).

In Figure 2 is shown a longitudinal section of an electrode assembly according to the invention immersed in wet soil. Corresponding reference numbers have the same meaning as in Figure 1.

Assembly 1 is immersed in wet soil 10. Central inner tubular air supply space 2 is provided with three inlet tubes for air 11, 12, 13. First inlet tube 11 located at a first end of air supply space 2 and second inlet tube 12 located at the opposite end of air supply space 2, form a single tube with water-impermeable tubular layer 5, i.e. the tubular layer between cathode 3 and inner space 2. Third inlet tube 13 is via a T-connection (not shown) fluid-tightly connected to tubular layer 5 such that leakage of water from wet soil 10 into the space 2 is prevented. Inlet tubes 11, 12 and 13 all have an inlet opening for air 14, 15, 16, respectively, positioned above the surface of wet soil 10 such that water is prevented to enter central air supply space 2 via inlet tubes 11, 12, 13. Cathode 3 and anode 4 are segmented by separation walls 17. Current collectors (not shown) are embedded in each segment of cathode 3 and anode 4 in order to electrically connect anode 4 with cathode 3 via an external electrically conductive path (not shown).

## Claims

1. A tubular electrode assembly (1) for use in a fuel cell comprising:
- a central inner tubular air supply space (2);
- an annular cathode (3) surrounding the tubular air supply space (2);
- an annular anode (4) surrounding the cathode (3);
- an oxygen-permeable layer (5) that is impermeable for water between the tubular air supply space (2) and the cathode (3);
- an electrically-insulating, ion-permeable layer (6) between the cathode (3) and the anode (4); and
- a first current collector attached to the anode (4) and a second current collector attached to the cathode (3), wherein the first and the second current collectors are suitable for electrically connecting the anode (4) with the cathode (3) via an external electrically conductive path,
wherein the central inner tubular air supply space (2) is provided with an inlet for air (11, 12, 13) that prevents water from entering the tubular air supply space (2).

2. A tubular electrode assembly (1) according to claim 1, wherein the inlet for air (11, 12, 13) is an inlet tube (11, 12, 13) of a material that is impermeable for water, wherein the inlet tube (11, 12, 13) has at one end an opening for air (14, 15, 16) and is, at its opposite end, fluid-tightly connected to the oxygen-permeable layer (5) between the tubular air supply space (2) and the cathode (3).

3. A tubular electrode assembly (1) according to claim 2, wherein the central inner tubular air supply space (2) has two opposite ends and is provided with a first inlet tube (11, 12, 13) at a first end of the tubular air supply space (2) and with a second inlet tube (11, 12, 13) at its opposite end and wherein the first and the second inlet tubes (11, 12, 13) and the oxygen-permeable layer (5) between the tubular air supply space (2) and the cathode (3) form a single tube.

4. A tubular electrode assembly (1) according to any one of the preceding claims, wherein the anode (4) is surrounded by a casing layer that only partially covers the outer surface of the anode.

5. A tubular electrode assembly (1) according to any one of the preceding claims, wherein the tubular electrode assembly (1) has a length to diameter ratio of at least 4, preferably in the range of from 5 to 100.

6. A tubular electrode assembly (1) according to any one of the preceding claims, wherein the electrically-insulating ion-permeable layer (6) is water-permeable.

7. Use of a tubular electrode assembly (1) according to any one of claims 1 to 6 in a fuel cell.

8. Use according to claim 7, wherein the fuel cell is a microbial fuel cell.

9. Use according to claim 8, wherein the fuel cell is a plant microbial fuel cell.

10. Microbial fuel cell comprising a tubular electrode assembly (1) according to any one of claims 1 to 6, wherein the first current collector and the second current collector comprised by the electrode assembly (1) are electrically connected via an external electrically conductive path and wherein the tubular electrode assembly (1) is suitable for immersion in wet soil or in an aqueous solution, wherein the wet soil or the aqueous solution comprises anodophilic micro-organisms, one or more organic compounds capable to be oxidised by the anodophilic micro-organisms, and nutrients.

11. A microbial fuel cell according to claim 10, wherein the tubular air supply space (2) is provided with one or more inlet tubes (11, 12, 13) as defined in claim 2 or 3, and wherein the opening for air (14, 15, 16) of any one of the one or more inlet tubes (11, 12, 13) is suitable for placing above the surface of the wet soil or the aqueous solution.

12. Microbial fuel cell according to claim 10 or 11, wherein the microbial fuel cell is a plant microbial fuel cell, and wherein the tubular electrode assembly (1) is suitable for immersion in wet soil, wherein the wet soil contains roots of a plant capable of converting carbon dioxide into the one or more organic compounds capable to be oxidised by the anodophilic micro-organisms, by means of photosynthesis.

13. A process for converting light energy into electricity using a plant microbial fuel cell according to claim 12, or a microbial fuel cell according to claim 10 or 11 wherein the wet soil or the aqueous solution contains algae or cyanobacteria, wherein the plant, algae or cyanobacteria are exposed to light, preferably daylight, and a molecular-oxygen containing gas, preferably air, is supplied to the central inner tubular air supply space and wherein the plant, algae or cyanobacteria convert carbon dioxide into an organic compound by means of photosynthesis, the roots of the plant, the algae or cyanobacteria excrete the organic compound into the wet soil or the aqueous solution and the anodophilic micro-organisms oxidise the organic compound to form electrons and protons.

## Patentansprüche

1. Röhrenförmige Elektrodenanordnung (1) zur Verwendung in einer Brennstoffzelle, umfassend:
- einen zentralen inneren röhrenförmigen Luftzuführraum (2);
- eine ringförmige Kathode (3), die den röhrenförmigen Luftzuführraum (2) umgibt;
- eine ringförmige Anode (4), die die Kathode (3) umgibt;
- eine sauerstoffdurchlässige Schicht (5), die für Wasser undurchlässig ist, zwischen dem röhrenförmigen Luftzuführraum (2) und der Kathode (3);
- eine elektrisch isolierende, ionendurchlässige Schicht (6) zwischen der Kathode (3) und der Anode (4); und
- einen ersten Stromkollektor, der an der Anode (4) angebracht ist, und einen zweiten Stromkollektor, der an der Kathode (3) angebracht ist, wobei die ersten und zweiten Stromkollektoren für eine elektrische Verbindung der Anode (4) mit der Kathode (3) über einen externen elektrisch leitfähigen Pfad geeignet sind,
- wobei der zentrale innere röhrenförmige Luftzuführraum (2) mit einem Einlass für Luft (11, 12, 13) der Wasser am Eintreten in den röhrenförmigen Luftzuführraum (2) hindert, versehen ist.

2. Röhrenförmige Elektrodenanordnung (1) nach Anspruch 1, wobei der Einlass für Luft (11, 12, 13) ein Einlassrohr (11, 12, 13) aus einem Material ist, das für Wasser undurchlässig ist, wobei das Einlassrohr (11, 12, 13) an einem Ende eine Öffnung für Luft (14, 15, 16) aufweist und, an seinem gegenüberliegenden Ende, mit der sauerstoffdurchlässigen Schicht (5) zwischen dem röhrenförmigen Luftzuführraum (2) und der Kathode (3) fluiddicht verbunden ist.

3. Röhrenförmige Elektrodenanordnung (1) nach Anspruch 2, wobei der zentrale innere röhrenförmig Luftzuführraum (2) zwei gegenüberliegende Enden aufweist und mit einem ersten Einlassrohr (11, 12, 13) an einem ersten Ende des röhrenförmigen Luftzuführraums (2) und mit einem zweiten Einlassrohr (11, 12, 13) an seinem gegenüberliegenden Ende versehen ist und wobei die ersten und zweiten Einlassrohre (11, 12, 13) und die sauerstoffdurchlässige Schicht (5) zwischen dem röhrenförmigen Luftzuführraum (2) und der Kathode (3) ein einziges Rohr bilden.

4. Röhrenförmige Elektrodenanordnung (1) nach einem der vorangehenden Ansprüche, wobei die Anode (4) von einer Ummantelungsschicht umgeben ist, die die Außenfläche der Anode nur teilweise bedeckt.

5. Röhrenförmige Elektrodenanordnung (1) nach einem der vorangehenden Ansprüche, wobei die röhrenförmige Elektrodenanordnung (1) ein Längen-Durchmesser- Verhältnis von mindestens 4, vorzugsweise im Bereich von 5 bis 100 aufweist.

6. Röhrenförmige Elektrodenanordnung (1) nach einem der vorangehenden Ansprüche, wobei die elektrisch isolierende ionendurchlässige Schicht (6) wasserdurchlässig ist.

7. Verwendung einer röhrenförmigen Elektrodenanordnung (1) nach einem der Ansprüche 1 bis 6 in einer Brennstoffzelle.

8. Verwendung nach Anspruch 7, wobei die Brennstoffzelle eine mikrobielle Brennstoffzelle ist.

9. Verwendung nach Anspruch 8, wobei die Brennstoffzelle eine pflanzliche mikrobielle Brennstoffzelle ist.

10. Mikrobielle Brennstoffzelle mit einer röhrenförmigen Elektrodenanordnung (1) nach einem der Ansprüche 1 bis 6, wobei der erste Stromkollektor und der zweite Stromkollektor, die die Elektrodenanordnung (1) umfasst, über einen externen elektrisch leitfähigen Pfad elektrisch verbunden sind und wobei die röhrenförmige Elektrodenanordnung (1) für Eintauchen in nassen Boden oder in eine wässrige Lösung geeignet ist, wobei der nasse Boden oder die wässrige Lösung anodophile Mikroorganismen, eine oder mehrere organischeVerbindungen, die von den anodophilen Mikroorganismen oxidierbar sind, und Nährstoffe umfasst.

11. Mikrobielle Brennstoffzelle nach Anspruch 10, wobei der röhrenförmige Luftzuführraum (2) mit einem oder mehreren Einlassrohren (11, 12, 13), wie in Anspruch 2 oder 3 definiert, versehen ist, und wobei die Öffnung für Luft (14, 15, 16) von einem des eines oder der mehreren Einlassrohre (11, 12, 13) zum Platzieren über der Oberfläche des nassen Bodens oder der wässrigen Lösung geeignet ist.

12. Mikrobielle Brennstoffzelle nach Anspruch 10 oder 11, wobei die mikrobielle Brennstoffzelle eine pflanzliche mikrobielle Brennstoffzelle ist und wobei die röhrenförmige Elektrodenanordnung (1) für Eintauchen in nassen Boden geeignet ist, wobei der nasse Boden Wurzeln einer Pflanze enthält, die fähig ist, Kohlendioxid mittels Photosynthese in die eine oder mehreren organischen Verbindungen umzuwandeln, die von den anodophilen Mikroorgansimen oxidierbar ist/sind.

13. Verfahren zur Umwandlung von Lichtenergie in Elektrizität unter Verwendung einer pflanzlichen mikrobiellen Brennstoffzelle nach Anspruch 12 oder einer mikrobiellen Brennstoffzelle nach Anspruch 10 oder 11, wobei der nasse Boden oder die wässrige Lösung Algen oder Cyanobakterien enthält, wobei die Pflanze, Algen oder Cyanobakterien Licht, vorzugsweise Tageslicht, ausgesetzt wird/werden und ein molekularen Sauerstoff enthaltendes Gas, vorzugsweise Luft, dem zentralen inneren röhrenförmigen Luftzuführraum zugeführt wird und wobei die Pflanze, Algen oder Cyanobakterien Kohlendioxid in eine organische Verbindung mittels Photosynthese umwandelt/umwandeln, die Wurzeln der Pflanze, die Algen oder Cyanobakterien die organische Verbindung bzw. Verbindungen in den nassen Boden oder die wässerige Lösung ausscheidet/ausscheiden und die anodophilen Mikroorganismen die organische Verbindung oxidieren, um Elektronen und Protonen zu bilden.

## Revendications

1. Ensemble d'électrodes tubulaire (1) destiné à être utilisé dans une pile à combustible, comprenant :
- un espace d'alimentation en air tubulaire interne central (2) ;
- une cathode annulaire (3) entourant l'espace d'alimentation en air tubulaire (2) ;
- une anode annulaire (4) entourant la cathode (3) ;
- une couche perméable à l'oxygène (5) qui est imperméable à l'eau entre l'espace d'alimentation en air tubulaire (2) et la cathode (3) ;
- une couche perméable aux ions électriquement isolante (6) entre la cathode (3) et l'anode (4) ; et
- un premier collecteur de courant relié à l'anode (4) et un second collecteur de courant relié à la cathode (3), dans lequel les premier et second collecteurs de courant sont adaptés pour connecter électriquement l'anode (4) à la cathode (3) via un trajet électriquement conducteur externe,
dans lequel l'espace d'alimentation en air tubulaire interne central (2) est pourvu d'une entrée d'air (11, 12, 13) qui empêche de l'eau de pénétrer dans l'espace d'alimentation en air tubulaire (2).

2. Ensemble d'électrodes tubulaire (1) selon la revendication 1, dans lequel l'entrée d'air (11, 12, 13) est un tube d'entrée (11, 12, 13) en un matériau qui est imperméable à l'eau, dans lequel le tube d'entrée (11, 12, 13) présente à une extrémité une ouverture (14, 15, 16) destinée à l'air et est, à son extrémité opposée, raccordé de manière étanche aux fluides à la couche perméable à l'oxygène (5) située entre la chambre d'alimentation en air tubulaire (2) et la cathode (3).

3. Ensemble d'électrodes tubulaire (1) selon la revendication 2, dans lequel l'espace d'alimentation en air tubulaire interne central (2) a deux extrémités opposées et est pourvu d'un premier tube d'entrée (11, 12, 13) à une première extrémité de l'espace d'alimentation en air tubulaire (2) et d'un second tube d'entrée (11, 12, 13) à son extrémité opposée, et dans lequel les premier et second tubes d'entrée (11, 12, 13) et la couche perméable à l'oxygène (5) entre l'espace d'alimentation en air tubulaire (2) et la cathode (3) forment un seul tube.

4. Ensemble d'électrodes tubulaire (1) selon l'une quelconque des revendications précédentes, dans lequel l'anode (4) est entourée par une couche d'enveloppe qui ne recouvre que partiellement la surface extérieure de l'anode.

5. Ensemble d'électrodes tubulaire (1) selon l'une quelconque des revendications précédentes, dans lequel l'ensemble d'électrodes tubulaire (1) a un rapport longueur sur diamètre d'au moins 4, de préférence dans la plage de 5 à 100.

6. Ensemble d'électrodes tubulaire (1) selon l'une quelconque des revendications précédentes, dans lequel la couche perméable aux ions électriquement isolante (6) est perméable à l'eau.

7. Utilisation d'un ensemble d'électrodes tubulaire (1) selon l'une quelconque des revendications 1 à 6 dans une pile à combustible.

8. Utilisation selon la revendication 7, dans laquelle la pile à combustible est une pile à combustible microbienne.

9. Utilisation selon la revendication 8, dans laquelle la pile à combustible est une pile à combustible microbienne végétale.

10. Pile à combustible microbienne comprenant un ensemble d'électrodes tubulaire (1) selon l'une quelconque des revendications 1 à 6, dans lequel le premier collecteur de courant et le second collecteur de courant compris dans l'ensemble d'électrodes (1) sont connectés électriquement via un trajet électriquement conducteur externe et dans lequel l'ensemble d'électrodes tubulaire (1) est adapté à une immersion dans un sol humide ou dans une solution aqueuse, dans laquelle le sol humide ou la solution aqueuse comprend des micro-organismes anodophiles, un ou plusieurs composés organiques susceptibles d'être oxydés par les micro-organismes anodophiles, et des nutriments.

11. Pile à combustible microbienne selon la revendication 10, dans laquelle l'espace d'alimentation en air tubulaire (2) est pourvu d'un ou plusieurs tubes d'entrée (11, 12, 13) tels que définis dans la revendication 2 ou 3, et dans laquelle l'ouverture (14, 15, 16) destinée à l'air de l'un quelconque des tubes d'entrée (11, 12, 13) est appropriée pour être placée au-dessus de la surface du sol humide ou de la solution aqueuse.

12. Pile à combustible microbienne selon la revendication 10 ou 11, dans laquelle la pile à combustible microbienne est une pile à combustible microbienne végétale, et dans laquelle l'ensemble d'électrodes tubulaire (1) est adapté à une immersion dans un sol humide, dans laquelle le sol humide contient les racines d'une plante capable de convertir du dioxyde de carbone en un ou plusieurs composés organiques susceptibles d'être oxydés par les micro-organismes anodophiles, par photosynthèse.

13. Procédé de conversion d'énergie lumineuse en électricité utilisant une pile à combustible microbienne végétale selon la revendication 12, ou pile à combustible microbienne selon la revendication 10 ou 11, où le sol humide ou la solution aqueuse contient des algues ou des cyanobactéries, où la plante, les algues ou les cyanobactéries sont exposées à de la lumière, de préférence la lumière du jour, et un gaz contenant de l'oxygène moléculaire, de préférence de l'air, est fourni à l'espace d'alimentation en air tubulaire interne central, et où la plante, les algues ou les cyanobactéries convertissent le dioxyde de carbone en un composé organique par photosynthèse, les racines de la plante, les algues ou les cyanobactéries excrètent le composé organique dans le sol humide ou la solution aqueuse et les micro-organismes anodophiles oxydent le composé organique pour former des électrons et des protons.
